# Europäisches Patentamt

# European Patent Office

# Office européen des brevets

(19)

(11) Numéro de publication: **0 166 480**

**B1**

(12) **FASCICULE DE BREVET EUROPÉEN**

(45) Date de publication du fascicule du brevet:
**25.01.89**

(51) Int. Cl.⁴: **F 01 N 3/24**

(21) Numéro de dépôt: **85200876.2**

(22) Date de dépôt: **04.06.85**

(54) Silencieux-épurateur d'échappement, spécialement pour des moteurs à combustion interne.

(30) Priorité: **12.06.84 IT 6759784**

(43) Date de publication de la demande:
**02.01.86 Bulletin 86/1**

(45) Mention de la délivrance du brevet:
**25.01.89 Bulletin 89/4**

(84) Etats contractants désignés:
**CH DE FR GB LI SE**

(56) Documents cité:
**DE-A-2 031 299**
**DE-A-2 163 537**
**DE-A-2 212 721**
**DE-A-2 418 108**
**US-A-2 065 681**
**US-A-2 985 255**
**US-A-4 054 418**
**US-A-4 345 431**

(73) Titulaire: **Carboni, Luigi, Via Argentero 2, I-10126 Torino (IT)**
Titulaire: **Cornaglia, Pier Antonio, Strada della Rovere 18 Fr. Testona, I-10024 Moncalieri (IT)**

(72) Inventeur: **Carboni, Luigi, Via Argentero 2, I-10126 Torino (IT)**

(74) Mandataire: **Patrito, Pier Franco, Dr. Ing., Via Don Minzoni 14, I-10121 Torino (IT)**

LIBER, STOCKHOLM 1989

## Description

La présente invention a pour objet un silencieux-épurateur d'échappement, spécialement pour moteurs à combustion interne, du type dans lequel les gaz d'échappement sont régularisés dans leurs conditions d'écoulement afin de réduire le bruit et sont soumis à une postcombustion dans le but d'en éliminer les parties imbrûlées, comprenant une première entrée pour les gaz d'échappement à traiter, une deuxième entrée disposée voisin de la première entrée pour de l'air additionnel, un ventilateur d'aspiration disposé pour agir en association avec lesdites première et deuxième entrées, une chambre de postcombustion disposée pour recevoir la confluence des écoulements venant desdites première et deuxième entrées, un brûleur disposé dans ladite chambre de postcombustion, formé par un corps creux ayant des ouvertures d'entrée et de sortie et contenant un moyen électrique d'allumage, et un raccord d'écoulement.

On sait que la pollution produite par les combustions, et spécialement par celles qui ont lieu à l'intérieur de moteurs à combustion interne, n'est pas due aux produits de combustion régulière des hydrocarbures (bioxyde de carbone et vapeur d'eau), mais aux produits dérivant d'une combustion incomplète (hydrocarbures imbrûlés et monoxyde de carbone), aux produits de combustion des impuretés (spécialement des composés du soufre) et aux produits dérivant de réactions chimiques collatérales (parmi lesquels sont particulièrement nuisibles les oxydes d'azote). Pour ces raisons on a fait beaucoup de recherches dans le but de réaliser des dispositifs épurateurs de gaz d'échappement, capables d'éliminer lesdits produits contaminants, et des résultats particulièrement intéressants ont été obtenus spécialement sur la base des études précédentes effectuées par le même auteur de la présente invention, à travers la combinaison d'une action de postcombustion et d'une action catalytique, dans un dispositif agissant en même temps comme silencieux et comme épurateur et approprié, de plus, à fournir une poussée auxiliaire utile pour la propulsion. Cependant, ces dispositifs posent certains problèmes dont la solution réalisative n'est pas facile, parmi lesquels le premier c'est la réalisation d'un moyen d'ignition simple et sûr, capable d'amorcer et d'entretenir la réaction de postcombustion malgré la faible inflammabilité des mélanges de gaz d'échappement, dans lesquelles les produits imbrûlés devant être brûlés se trouvent dans un état très dilué.

Les difficultés qu'on rencontre dans l'épuration des gaz d'échappement produits par les combustibles gazeux ou par l'essence se multiplient d'ailleurs dans l'épuration des gaz d'échappement produits par le gas-oil ou par les huiles combustibles, spécialement à cause de la teneur élevée des impuretés qui y sont contenues. De ce fait il n'a pas été possible jusqu'à maintenant d'épurer d'une manière satisfaisante les échappements des moteurs Diesel.

Le brevet US-A-2 065 681 décrit un dispositif du genre mentionné dans le préambule, où le ventilateur d'aspiration, de type radial, comporte trois rotors coaxiaux et donc une complication constructive considérable. Le moyen électrique d'allumage est constitué par une bougie à étincelles, dont l'action n'est pas suffisante sur un mélange de faible inflammabilité. D'autre part, dans l'absence de toute action catalytique, les substances nuisibles dérivant de la combustion ne sont nullement éliminées.

De son côté, le brevet US-A-4 054 418 décrit un dispositif catalytique pour éliminer les substances nuisibles des gaz d'échappement, comprenant un brûleur alimenté par du combustible, des éléments catalytiques traversés par les gaz et un ventilateur actionné par un moteur pour maintenir le mouvement des gaz. En considération de la nécessité d'une alimentation de combustible et d'un moteur, ce dispositif est approprié pour des installations fixes mais non pour des moteurs de véhicules.

La présente invention a pour but de donner une solution satisfaisante aux problèmes posés jusqu'à présent par les silencieux-épurateurs du genre mentionné.

Dans un silencieux-épurateur suivant le préambule, ce but est atteint, selon la présente invention, par le fait que ladite deuxième entrée pour l'air additionnel est disposée en anneau autour de la première entrée et est pourvue de soupapes contre le retour, que ledit ventilateur d'aspiration est un ventilateur axial disposé pour agir avec sa portion centrale en association avec la première entrée et avec sa portion périphérique en association avec la deuxième entrée, que ledit moyen électrique d'allumage est constitué par des éléments chauffés électriquement à la température d'émission lumineuse, qu'un ensemble d'éléments catalytiques est disposé en aval de ladite chambre de postcombustion pour réaliser une action catalytique visant à supprimer les substances nuisibles, et que le dispositif est entouré par une enveloppe thermiquement et acoustiquement isolante dont les parois internes sont profilées aérodynamiquement de sorte à suivre les transformations des gaz traversant les différentes parties du dispositif.

On remarque en particulier que le ventilateur axial prévu, en association avec des entrées disposées comme indiqué, donne lieu à une construction extrêmement simple, et que les éléments incandéscents d'allumage sont particulièrement appropriés pour agir sur un mélange très pauvre, tel que les gaz d'échappement.

Grâce à ces caractéristiques, les gaz d'échappement à épurer, venant généralement d'un moteur à combustion interne, acheminés vers ladite première entrée, actionnent le ventilateur en donnant lieu à l'aspiration d'air additionnel à travers ladite deuxième entrée, et les deux courants arrivent à la chambre de postcombustion stratifiés en direction radiale, avec des couches extérieures formées principalement par de l'air frais et des couches intérieures formées principalement par des gaz d'échappement chauds. Une partie de ces derniers pénètre dans le brûleur où, à cause de l'effet combiné des émissions thermique et lumineuse des éléments thermiques, a lieu une dissociation endothermique du bioxyde de carbone et d'autres composés. On a constaté que ce phénomène est hautement favorisé par l'effet photochimique exercé par les éléments thermiques incandéscents. Le phénomène, lequel a lieu d'une manière intense dans le brûleur, se vérifie partiellement aussi dans le milieu environnant quand, pendant le fonctionnement à régime, le brûleur tout entier atteint une température d'émission lumineuse. La partie des gaz d'échappement ainsi traitée s'écoule ensuite à travers les ouvertures de sortie du brûleur, en se mélangeant avec le reste des gaz dans la chambre de postcombustion, où s'avère la recombinaison exothermique du bioxyde de carbone et d'autres composés, avec une augmentation conséquente de la température et une ignition efficace des substances imbrûlées et du monoxyde de carbone, qui sont alors brûlés à l'aide l'oxygène contenu dans l'air additionnel. De cette façon on obtient l'élimination presque complète des substances imbrûlées et du monoxyde de carbone. Les gaz chauds sortant de la chambre de postcombustion passent alors dans l'ensemble d'éléments catalytiques, dans lequel un cracking catalytique affecte les résidus des substances imbrûlées et le monoxyde de carbone est oxydé, tandis que les oxydes d'azote et certaines autres substances sont décomposés en les réduisant à des éléments non contaminants. Enfin, à travers le raccord d'échappement les gaz sont déchargés en récupérant au moins en partie leur énergie cinétique sous la forme d'une poussée mécanique utilisable.

Lorsque le dispositif est destiné à être appliqué à un véhicule, ladite deuxième entrée est avantageusement disposée de sorte à être soumise à l'action d'une pression de stagnation produite par le vent de la course du véhicule. De cette façon on promeut l'aspiration d'air additionnel et, en des conditions particulières, ce peut être l'air additionnel lui-même qui actionne le ventilateur, en exerçant alors une action d'aspiration sur l'échappement du moteur auquel le dispositif est appliqué.

Le ventilateur d'aspiration est calculé pour exercer son action maximale à un régime moyen (par exemple au 60 % du régime maximal) du moteur auquel le dispositif est destiné. Cela donne lieu au plus grand rendement pratique, en considération du fait que les régimes maximaux ne sont utilisés que rarement.

De préférence, ledit brûleur est formé par un corps en acier inoxydable contenant du nickel. De cette façon, les propriétés catalytiques de ce metal sont utilisées pour rendre plus intenses les effets décrits.

De préférence, en outre, ledit ensemble d'éléments catalytiques est constitué par une série de disques et de bagues alternés, formés par un fritté perméable de globules sphéroïdaux creux de cuivre ou d'un alliage de cuivre. Des éléments catalytiques de ce genre, de coût raisonnable, ont une longue durée et joignent un effet utile de filtration à leur action catalytique. Cette dernière, à différence de celle des catalyseurs platinés qui sont employés habituellement, n'est pas limitée à l'action sur les oxydes d'azote, mais agit, en particulier, sur les composés sulfurés, en donnant lieu à des résidus qui sont solides et qui, par conséquent, peuvent être facilement séparés.

De préférence, en aval de l'ensemble d'éléments cataliseurs est installé un organe non dissipatif d'amortissement du bruit, formé par un ressort en spirale de lame métallique perforée. Un tel organe régularise le courant sortant, en atténuant ses vibrations, sans opposer aucune résistance appréciable au courant lui-même.

Il est avantageusement prévu que le raccord d'écoulement soit délimité par deux éléments réciproquement emboîtés, sollicités l'un vers l'autre par des organes élastiques, avec une pression correspondante à la sollicitation exercée par les gaz d'échappement en des conditions moyennes de fonctionnement. De cette manière, dans les conditions de fonctionnement à des régimes supérieurs à la moyenne, lesdits deux éléments délimitant le raccord d'écoulement sont éloignés l'un de l'autre par la pression des gaz, et ils offrent alors à l'écoulement une section plus grande, en évitant ainsi l'étranglement que dans ces conditions se vérifie dans les silencieux habituels et qui mène à une réduction du rendement.

Ces caractéristiques et d'autres de l'invention ressortiront plus clairement de la suivante description d'une forme de réalisation, donnée à titre d'exemple non limitatif et illustrée schématiquement dans les dessins annexés, dans lesquels:

Fig. 1   représente à une échelle réduite une section longitudinale d'un dispositif silencieux-épurateur d'échappement selon la présente invention;

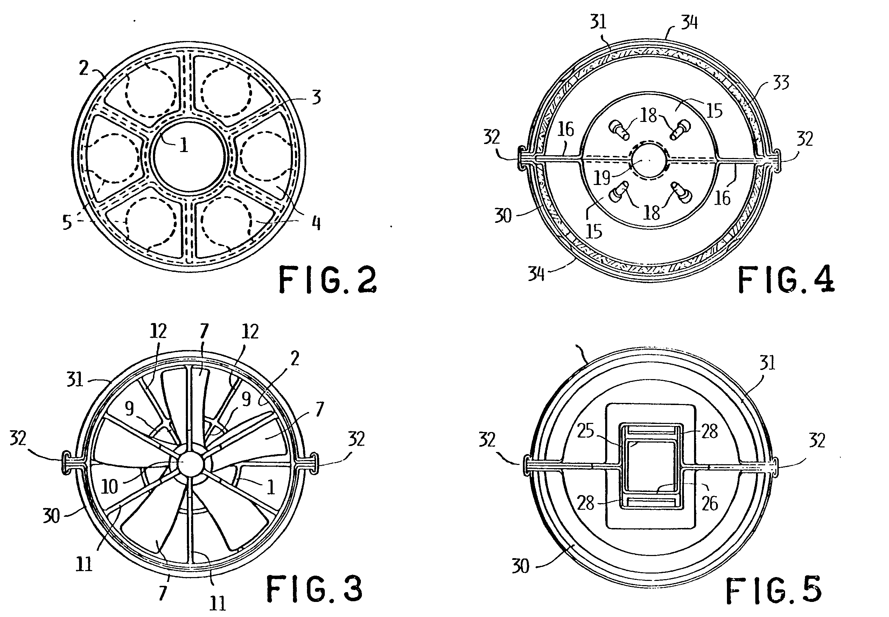

Fig. 2   est une vue, prise suivant la flèche II de la figure 1, de la deuxième entrée munie d'une soupape contre le retour;

Fig. 3   représente une coupe faite selon la ligne brisée III - III de la figure 1, et elle montre en particulier le ventilateur d'aspiration;

Fig. 4   représente une coupe faite selon la ligne IV - IV de la figure 1, et elle montre en particulier le brûleur;

Fig. 5   est une vue axiale du dispositif du côté d'écoulement, prise suivant la flèche V de la figure 1.

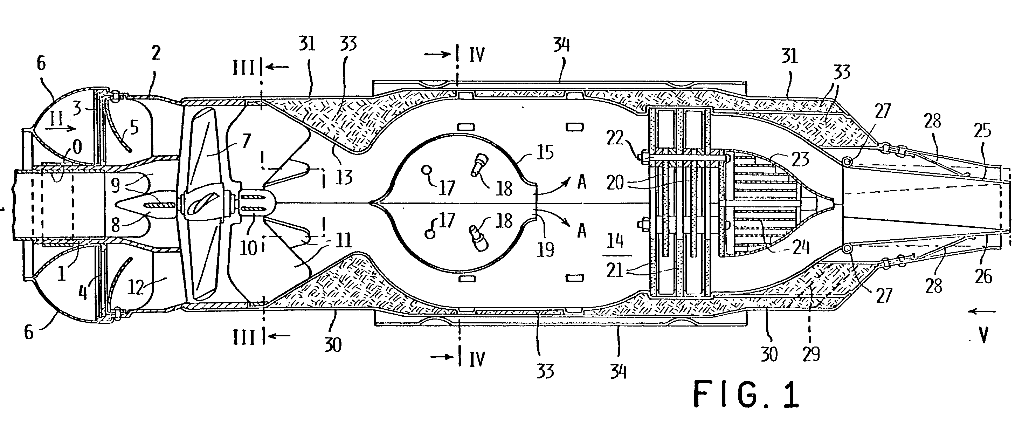

Par le numéro 0 est indiqué, dans la figure 1, un tronçon terminal d'un tuyau d'échappement, par exemple du moteur endothermique d'un véhicule, auquel est appliqué le dispositif silencieux-épurateur selon l'invention. Ce dispositif a une forme et des dimensions similaires de celles d'un pot d'échappement habituel, et par conséquent son installation ne comporte aucun problème particulier. Le tronçon 0 du tuyau d'échappement est inséré et fixé dans un élément tubulaire 1 constituant la première entrée du dispositif. Coaxialement autour de cette première entrée 1 est disposé un élément tubulaire 2 de plus grand diamètre, constituant la deuxième entrée destinée au passage de l'air additionnel, deuxième entrée que, le cas échéant, on disposera de sorte qu'elle soit saisie par le vent de la course afin qu'une pression de stagnation puisse agir sur elle. Dans l'élément tubulaire 2 est disposée une plaque de soupape 3 coopérant avec des segments 4 de soupape lamellaire protégés par des épaulements postérieurs courbes 5, pour former une soupape contre le retour permettant l'aspiration d'air, mais non son reflux accidentel. Cette unité d'aspiration est protégée extérieurement par une coquille 6 de tôle perforée ou de filet métallique.

Derrière les débouchés concentriques des éléments d'entrée 1 et 2 est disposé un ventilateur en hélice à axe longitudinal 7, dans le cas présent à cinq palettes, dont l'axe est librement pivotant dans des paliers 8 et 10. Le palier 8 est supporté par des ailettes radiales 9 dans le premier élément d'entrée 1, et le palier 10 est supporté au centre d'une étoile d'ailettes 11 d'orientation du flux, ancrées périphériquement à l'enveloppe du dispositif, décrite plus avant. Avantageusement, des ailettes d'orientation similaires 12 sont disposées dans le débouché de l'élément tubulaire 2, qu'elles relient mécaniquement avec l'élément coaxial d'entrée 1.

En aval des ailettes 11 est disposée une chambre de postcombustion 14, dans la partie antérieure de laquelle est installé un brûleur 15. Ce dernier est constitué par un corps creux substantiellement sphéroïdal, en tôle d'acier inoxydable emboutie en deux coquilles qui s'étendent latéralement pour former des ailettes 16 servant à soutenir le brûleur 15. A partir des ailettes 11, la paroi interne de l'enveloppe du dispositif forme une section convergente 13 qui raccorde la section globale d'entrée du dispositif à la section plus réduite de passage disponible dans la chambre de postcombustion 14 autour du brûleur 15.

Dans la partie antérieure du brûleur 15 sont formées des ouvertures 17, à travers lesquelles une partie du courant qui lèche le brûleur peut pénétrer dans ce dernier. Dans la partie postérieure du brûleur sont montés des éléments thermiques 18, dans le cas présent sous la forme de bougies céramiques contenant des résistances électriques projetées et alimentées pour maintenir lesdites bougies à une température d'émission lumineuse, par exemple à 600°C. Le brûleur se termine postérieurement par au moins une ouverture d'écoulement 19, à travers laquelle il débouche dans la chambre de postcombustion 14.

A l'extrémité arrière de la chambre de postcombustion 14 est installé un ensemble d'éléments catalytiques constitués par des disques 20 qui s'alternent avec des bagues 21; ces parties sont assemblées par des boulons longitudinaux 22, et les bagues 21 sont supportées périphériquement par l'enveloppe du dispositif. Les disques 20 et les bagues 21 sont formés, de préférence, par un fritté perméable de globules sphéroïdaux creux de cuivre ou d'un alliage de cuivre. Dans ce matériel, le rapport entre la surface exposée et le volume est très élevé, et par conséquence ce matériel est approprié pour être utilisé comme cataliseur efficace et, en outre, il présente des bonnes propriétés de filtration. Comme cataliseur, il agit efficacement, en particulier, sur les composés azotés et sulfurés, et comme élement filtrant il sépare les résidus pulvérulents, spécialement les oxydes de plomb et les composés sulfurés.

Le dernier disque 20 porte un organe d'amortissement du bruit formé par une enveloppe effilée 23 en tôle perforée, dans lequel est enroulé, avec ses spires espacées, un ressort 24 en spirale de lame métallique, traversée elle aussi par des perforations. Cette structure forme une pluralité de chambres communiquantes, substantiellement ouvertes dans la direction du flux, qui exercent une action efficace d'atténuaton des vibrations, et par conséquent des bruits, sans opposer une résistance appréciable au flux de gaz.

Le dispositif se termine par une ouverture d'écoulement qui, dans l'exemple représenté, est délimitée par deux éléments en canal 25 et 26, emboîtés l'un dans l'autre, articulés antérieurement en 27 à l'enveloppe du dispositif et poussés l'un vers l'autre par des ressorts en lame 28. Les éléments 25 et 26 peuvent se déplacer, quand la force des ressorts en lame 28 est vaincue, jusqu'à une position indiquée par une ligne a points et traits dans la figure 1, en augmentant alors la section d'écoulement du dispositif.

Des passages 29 peuvent être prévus afin de permettre à l'air ambiant de se porter à lécher les éléments en canal 25 et 26, en s'écoulant postérieurement autour du flux des gaz d'échappement sortant de ces éléments en canal. Ce flux d'air agit aussi dans le sens d'un refroidissement utile des ressorts 28.

L'enveloppe du dispositif, laquelle renferme tous les composant décrits jusqu'ici, est formée substantiellement par deux coquilles en tôle emboutie, l'une inférieure 30 et l'autre supérieure 31, jointes lelong d'un plan axial horizontal et reliées l'une l'autre par des bordures 32. Cette disposition autorise un montage très facile de toute la structure, et les bordures 32 assurent aussi le reliage de certaines parties internes, telles que les ailettes 16 du brûleur 15. Si cela est considéré à propos, certaines parties de l'une des coquilles peuvent être rendues démontables, en remplaçant des tronçons de bordure par des reliages au mien de boulons, afin de permettre l'accès aux parti es internes mobiles, telles que le ventilateur 7 et les éléments en canal 25, 26, ou bien à d'autres parties dont on peut prévoir le remplacement. Les coquilles de l'enveloppe sont à parois doubles, et entre la parois externe et celle interne sont disposés des matériaux 33 acoustiquement et thermiquement isolants. Dans l'endroit de la chambre de postcombustion 14, qui représente une source de chaleur, on peut prévoir aussi une paroi extérieure 34 entourant à une certaine distance l'enveloppe 30 - 31 pour guider l'air à lécher l'enveloppe et à le refroidir efficacement.

Le fonctionnement du dispositif décrit est le suivant. Les gaz d'échappement venant du moteur passent du tuyau d'échappement 0 à l'entrée tubulaire 1 et agissent sur le ventilateur 7 en le faisant tourner et par cela donnant lieu à l'aspiration d'un courant d'air additionnel à partir de l'entrée 2 à travers la soupape contre le retour 3 - 5. Les deux courants procèdent ensemble, orientés par les ailettes 11, mais au moins partiellement séparés par une stratification, avec des couches plus chaudes formées principalement par des gaz d'échappement à l'intérieur, et avec des couches plus froides formées principalement par de l'air additionnel à l'extérieur. Ces gaz arrivent à la chambre de postcombustion 14 en léchant le brûleur 15. Une partie des gaz d'échappement pénètre dans le brûleur 15 à travers les ouvertures 17 et, sous l'action thermique et l'effet photochimique des bougies 18 chauffées au rouge, subit une dissociation endothermique qui intéresse spécialement le bioxyde de carbone, et ensuite elle s'écoule à travers l'ouverture 19 en se mélangeant selon les flèches A avec le reste des gaz d'échappement et avec l'air additionnel qui se trouvent dans la chambre de postcombustion 14. Dans le mélange ainsi formé a lieu une recombinaison exothermique, spécialement du bioxyde de carbone, sous la forme d'une flamme très chaude qui propage au mélange présent tout entier une réaction conduisant à la combustion presque complète, à l'aide de l'oxygène de l'air additionnel, des substances imbrûlées et du monoxyde de carbone présents.

Le mélange chaud et désormais épuré pour la plus grande partie arrive alors en contact avec les éléments catalytiques 20 et 21, en passant entr'eux et en les traversant partiellement, et il est soumis ici à une action de cracking catalytique qui décompose les derniers résidus de substances imbrûlées, à une action d'oxydation catalytique qui intéresse les résidus éventuels de monoxyde de carbone, à une action catalytique qui décompose les oxydes d'azote en les transformant en des éléments non contaminants, et à une action chimique qui transforme en des substances solides pulvérulentes les coposés sulfurés. L'ensemble des disques 20 et des bagues 21 constitue en même temps un abatteur de matières pulvérulentes qui fonctionne soit, partiellement, par filtration, grâce à la perméabilité des éléments catalytiques, soit par déviation du flux; de cette manière on obtient d'éliminer des gaz d'échappement, en particulier, les oxydes de plomb dérivant de la combustion des substances antidétonantes éventuellement contenues dans le combustible utilisé, et les composés sulfurés pulvérulents. En outre, le passage à travers les éléments catalytiques 20 et 21 donne encore lieu à une forte atténuation du bruit des gaz; ce bruit est enfin atténué ultérieurement par la lame métallique perforée 24 enroulée en spirale, laquelle donne lieu à cette atténuation sans une dispersion appréciable d'énergie.

Enfin, les gaz sortent à travers les élements en canal 25 et 26. Les ressorts 28 son projetés de manière à équilibrer la pression exercée par les gaz d'échappement sur les éléments en canal 25 et 26 en des conditions moyennes de fonctionnement. Aux régimes plus élevés, cette pression augmente et provoque un éloignement réciproque des éléments en canal 25 et 26, en augmentant ainsi la section d'écoulement plutôt que la vitesse des gaz, et en réduisant donc avantageusement la contrepression à l'échappement.

Quand on prévoit les passages 29, un flux laminaire d'air s'écoule autour du flux principal des gaz d'échappement, en formant ainsi une sorte de coussinet entre les gaz d'échappement et l'ambient, avec le résultat de réduire les turbulences, les résistances et le bruit, et de refroidir avantageusement les parties mobiles du raccord d'écoulement.

En effet, les phénomènes sommairement décrits n'on pas un déroulement continu mais, en plusieurs conditions de fonctionnement, dans l'intérieur du dispositif s'établit un régime dynamque d'oscillations de pression qui se propagent alternativament dans les deux sens longitudinaux; la fonction de la soupape 3 - 5 contre le retour est précisément celle de réfléchir les ondes de pression quand elles viennent de l'intérieur, en empêchant leur reflux et en favorisant l'établissement dudit régime dynamique d'oscillations de pression, similaire de celui d'un pulsoréacteur.

En vertu des caractéristiques et comportements décrits, le dispositif selon l'invention permet d'épurer d'une manière très efficace des gaz d'échappement, en éliminant les substances contaminantes qu'ils contiennent, et en même temps d'atténuer efficacement les vibrations et, par conséquent, les bruits. De ce fait, le dispositif selon l'invention, bien qu'il soit approprié pour des applications plus générales, est particulièrement utile pour épurer et rendre silencieux l'échappement de moteurs à combustion interne. Il faut remarquer que, pour les raisons indiquées ci-haut, le dispositif selon l'invention est capable d'épurer efficacement les échappements des moteurs Diesel et en général des installations dans lesquelles on brûle des huiles combustibles, qui jusqu'à maintenant étaient pratiquement exclues de toute possibilité d'épuration efficace.

Un avantage spécial est obtenu dans l'application aux moteurs de ce genre montés sur des véhicules, car dans ce cas la poussée exercée par les gaz d'échappement s'écoulant du dispositif peut être utilisée pour fournir une poussée propulsive additionnelle. A cet égard on doit remarquer que la structure, décrite comme étant celle d'un silencieux-épurateur capable de fournir aussi une poussée propulsive, peut être aussi utilisée, si nécessaire, en donnant une plus grande importance à l'effet propulsif, en injectant opportunément dans la chambre de postcombustion un flux de combustible liquide, pulvérisé ou gazeux.

Naturellement, des différentes modifications peuvent être portées aux composants décrits. Ainsi, par exemple, dans le brûleur on peut utiliser comme éléments thermiques, au lieu des bougies céramiques, d'autres types de résistances électriques spéciales, ou bien des éléments en barre ou d'une autre forme, chauffés par induction. Le corps du brûleur peut être réalisé en des matériaux différents de l'acier inoxydable, par exemple et avantageusement en quartz. Au lieu des éléments en canal décrits, le raccord d'écoulement peut présenter des autres dispositions à surface variable, par exemple un système à lamelles multiples similaire de celui qui est employé dans les échappements des turboréacteurs de propulsion.

## Revendications

1. Silencieux-épurateur d'échappement, spécialement pour moteurs à combustion interne, du type dans lequel les gaz d'échappement sont régularisés dans leurs conditions d'écoulement afin de réduire le bruit et sont soumis à une postcombustion dans le but d'en éliminer les parties imbrûlées, comprenant une première entrée (1) pour les gaz d'échappement à traiter, une deuxième entrée (2) disposée voisin de la première entrée (1) pour de l'air additionnel, un ventilateur d'aspiration (7) disposé pour agir en association avec lesdites première et deuxième entrées (1, 2), une chambre de postcombustion (14) disposée pour recevoir la confluence des écoulements venant desdites première et deuxième entrées (1, 2), un brûleur disposé dans ladite chambre de postcombustion, formé par un corps creux (15) ayant des ouvertures d'entrée (17) et de sortie (19) et contenant un moyen électrique d'allumage (18), et un raccord d'écoulement (25, 26), caractérisé en ce que ladite deuxième entrée (2) pour l'air additionnel est disposée en anneau autour de la première entrée (1) et est pourvue de soupapes (3 - 5) contre le retour, que ledit ventilateur d'aspiration (7) est un ventilateur axial disposé pour agir avec sa portion centrale en association avec la première entrée (1) et avec sa portion périphérique en association avec la deuxième entrée (2), que ledit moyen électrique d'allumage est constitué par des éléments (18) chauffés électriquement à la température d'émission lumineuse, qu'un ensemble d'éléments catalytiques (20, 21) est disposé en aval de ladite chambre de postcombustion (14) pour réaliser une action catalytique visant à supprimer les substances nuisibles, et que le dispositif est entouré par une enveloppe (30, 31) thermiquement et acoustiquement isolante dont les parois internes sont profilées aérodynamiquement de sorte à suivre les transformations des gaz traversant les différentes parties du dispositif.

2. Silencieux-épurateur d'échappement selon la revendication 1, destiné à un véhicule, caractérisé en ce que ladite deuxième entrée (2) est disposée de façon telle que sur elle agit une pression de stagnation produite par le vent de la course du véhicule.

3. Silencieux-épurateur d'échappement selon la revendication 1, caractérisé en ce que le ventilateur d'aspiration (7) est projeté pour exercer son action maximale à un régime moyen (tel que le 60 % du régime maximal) du moteur auquel le dispositif est destiné.

4. Silencieux-épurateur d'échappement selon la revendication 1, caractérisé en ce que des séries d'ailettes radiales (9, 12, 11) d'orientation du flux et de support mécanique d'organes sont disposées dans lesdites première (1) et deuxième (2) entrées et en aval dudit ventilateur (7).

5. Silencieux-épurateur d'échappement selon la revendication 1, caractérisé en ce que ledit brûleur (15) est formé par un corps en acier inoxydable contenant du nickel.

6. Silencieux-épurateur d'échappement selon la revendication 1, caractérisé en ce que ledit brûleur (15) est formé par un corps en quartz.

7. Silencieux-épurateur d'échappement selon la revendication 1, caractérisé en ce que lesdits éléments thermiques (18) sont formés par des bougies céramiques comprenant ces résistances électriques de chauffage.

8. Silencieux-épurateur d'échappement selon la revendication 1, caractérisé en ce que lesdits éléments thermiques (18) sont formés par des éléments chauffés par induction.

9. Silencieux-épurateur d'échappement selon la revendication 1, caractérisé en ce que ledit ensemble (20 - 21) d'éléments catalytiques est formé par une série de disques (20) et de bagues (21) disposés alternativement, formés par un fritté perméable de globules sphéroïdaux creux de cuivre ou d'un alliage de cuivre.

10. Silencieux-épurateur d'échappent selon la revendication 1, caractérisé en ce qu'en aval de l'ensemble (20 - 21) d'éléments catalytiques est installé un organe amortisseur de bruit non dissipatif, formé par un ressort en spirale (24) de lame métallique perforée.

11. Silencieux-épurateur d'échappement selon la revendication 1, caractérisé en ce que ledit raccord d'écoulement (25 - 26) comprend des éléments mobiles (25 et 26) sollicités élastiquement et déplacés par la pression des gaz sortants.

12. Silencieux-épurateur d'échappement selon la revendication 11, caractérisé en ce que ledit raccord d'écoulement (25 - 26) est délimité par deux éléments (25 et 26) réciproquement emboîtés, sollicités l'un vers l'autre par des organes élastiques (28), avec una pression correspondante à la sollicitation exercée per les gaz d'échappement en des conditions moyennes de fonctionnement.

13. Silencieux-épurateur d'échappement selon la revendication 1, caractérisé en ce que des passages d'air (29) sont disposés de sorte à guider un flux lamellaire d'air ambiant autour dudit raccord d'écoulement (25 - 26).

14. Silencieux-épurateur d'échappement selon la revendication 1, caractérisé en ce que ladte enveloppe (30 - 31) du dispositif est constituée principalement par deux coquilles (30 et 31) juxtaposées selon un plan axial et reliées l'une l'autre périphériquement en renfermant les composants internes.

15. Silencieux-épurateur d'échappement selon la revendication 14, caractérisé en ce que certaines parties desdites coquilles (30, 31) sont reliées d'une manière démontable pour permettre l'accès à des composants internes.

16. Silencieux-épurateur d'échappement selon la revendication 14, caractérisé en ce que lesdites coquilles (30, 31) sont à double paroi et qu'elles renferment entre la paroi externe et la paroi interne un matériel (33) thermiquement et acoustiqueent isolant.

17. Silencieux-épurateur d'échappement selon la revendication 14, caractérisé en ce qu'autour de la chambre de postcombustion (14) est disposée une paroi ultérieure (34) entourant à une certaine distance les coquilles (30, 31) de l'enveloppe du dispositif.

18. Silencieux-épurateur d'échappement selon la revendication 1, caractérisé en ce qu'il comprend un moyen d'alimentation de combustible liquide, pulvérisé ou gazeux, débouchant dans la chambre de postcombustion, afin de réaliser une poussée propulsive.

**Patentansprüche**

1. Schalldämpfender und gasreinigender Auspufftopf, insbesondere für Verbrennungsmotoren, der Art in welcher die Stromverhältnisse der Abgase regelmässig gemacht werden, um den Schall zu vermindern, und die Abgase einer Nachverbrennung unterworfen werden, um die unverbrannte Teile zu beseitigen, mit einem ersten Eintritt (1) für die zu behandelnden Abgase, mit einem in der Nähe des ersten Eintritts (1) angeordneten zweiten Eintritt (2) für Zusatzluft, mit einem Sauglüfter (7), der mit dem ersten und dem zweiten Eintritt (1, 2) zusammenarbeitet, mit einer Nachverbrennungskammer (14) die den Zusammenfluss der von dem ersten und dem zweiten Eintritt (1, 2) herkommenden Ströme annimmt, mit einem in der Nachverbrennungskammer angeordneten Brenner, der aus einem mit Eintrittsöffnungen (17) und mit Austrittsöffnungen (19) versehenen hohlen Körper (15) besteht und ein elektrisches Zündungsmittel (18) enthält, und mit einem Auslaßstück (25, 26), dadurch gekennzeichnet, dass der zweite Eintritt (2) für Zusatzluft ringförmig um den ersten Eintritt (1) angeordnet und mit Rückschlagventile (3 - 5) versehen ist, dass der Sauglüfter (7) ein axiales Sauglüfter ist und durch seinen zentralen Teil mit dem ersten Eintritt (1), durch seinen peripherischen Teil mit dem zweiten Eintritt (2) zusammenarbeitet, dass das elektrische Zündungsmittel aus elektrisch bis zur Temperatur der Lichtausstrahlung geheizten Organen (18) besteht, dass eine Menge katalytischer Organen (20, 21) stromabwärts der Nachverbrennungskammer (14) angeordnet ist, um eine katalytische Wirkung auszuüben die die Schadstoffe zu beseitigen strebt, und dass das Gerät durch einer thermisch und akustisch isolierenden Umhüllung (30, 31) umgegeben ist, deren innere Wände gemäss der Umwandlungen der die verschiedene Teile des Geräts befahrenden Gase aerodynamisch geformt sind.

2. Schalldämpfender und gasreinigender Auspufftopf nach Anspruch 1, für ein Fahrzeug bestimmt, dadurch gekennzeichnet, dass der zweite Eintritt (2) in der Weise angeordnet ist, dass er einen durch den Wind des Fahrzeuglaufs verursachten Staudruck annimmt.

3. Schalldämpfender und gasreinigender Auspufftopf nach Anspruch 1, dadurch gekennzeichnet, dass der Sauglüfter (7) in der Weise abgestimmt ist, dass er seine maximale Wirkung bei einer mittleren Drehzahl (beispielsweise 60 % der maximalen Drehzahl) des Motors, für welchen das Gerät bestimmt ist, ausübt.

4. Schalldämpfender und gasreinigender Auspufftopf nach Anspruch 1, dadurch gekennzeichnet, dass Mengen radialer Rippen (9, 12, 11) zur Stromorientierung und zur mechanischen Organenlagerung im Inneren des ersten Eintritts (1), im Inneren des zweiten Eintritts (2) und stromabwärts des Sauglüfters angeordnet sind.

5. Schalldämpfender und gasreinigender Auspufftopf nach Anspruch 1, dadurch gekennzeichnet, dass der Brenner (15) aus einem Körper aus Nickel enthaltendem rostfreiem Stahl besteht.

6. Schalldämpfender und gasreinigender Auspufftopf nach Anspruch 1, dadurch gekennzeichnet, dass der Brenner (15) aus einem Körper aus Quarz besteht.

7. Schalldämpfender und gasreinigender Auspufftopf nach Anspruch 1, dadurch gekennzeichnet, dass die thermischen Organen (18) aus keramischen Zündkerzen bestehen, die elektrische Heizwiderstände umfassen.

8. Schalldämpfender und gasreinigender Auspufftopf nach Anspruch 1, dadurch gekennzeichnet, dass die thermischen Organen (18) aus mittels Induktion geheizten Organen bestehen.

9. Schalldämpfender und gasreinigender Auspufftopf nach Anspruch 1, dadurch gekennzeichnet, dass die Menge (20 - 21) katalytischer Organen aus einer Menge von Scheiben (20) und von Ringen (21) besteht, die abwechselnd angeordnet sind und aus einem durchlässigen Sinterwerkstoff aus hohlen rundkörnigen Körperchen aus Kupfer or Kupferlegierung bestehen.

10. Schalldämpfender und gasreinigender Auspufftopf nach Anspruch 1, dadurch gekennzeichnet, dass ein nicht aufbrauchendes schalldämpfendes Organ abstromwärts der Menge (20 - 21) katalytischer Organen angeordnet ist, das aus einer Spiralfeder (24) aus gelochtem Metallblatt besteht.

11. Schalldämpfender und gasreinigender Auspufftopf nach Anspruch 1, dadurch gekennzeichnet, dass das Auslaßstück (25 - 26) bewegliche Organe umfasst, die durch den Druck der Abgase elastisch beansprucht und verschoben werden.

12. Schalldämpfender und gasreinigender Auspufftopf nach Anspruch 11, dadurch gekennzeichnet, dass das Auslaßstück (25 - 26) durch zwei gegenseitig eingesetzten Organen (25 und 26) abgegrenzt ist, die durch elastischen Organen (28) mit einem Druck, der der Beanspruchung der Abgase in mittleren Betriebverhältnissen entspricht, gegenseitig beansprucht werden.

13. Schalldämpfender und gasreinigender Auspufftopf nach Anspruch 1, dadurch gekennzeichnet, dass Luftdurchgänge (29) in der Weise angeordnet sind, dass sie einen laminären Strom aus Umweltluft um das Auslaßstück (25 - 26) fördern.

14. Schalldämpfender und gasreinigender Auspufftopf nach Anspruch 1, dadurch gekennzeichnet, dass die Umgebung (30 - 31) des Geräts hauptsächlich aus zwei Schalen (30 und 31) besteht, die gemäss einer axialen Ebene aneinandergelagert und peripherisch aneinander verbunden sind, und die inneren Teile einschliessen.

15. Schalldämpfender und gasreinigender Auspufftopf nach Anspruch 14, dadurch gekennzeichnet, dass einige Teile der Schalen (30, 31) abnehmbar verbunden sind, um den Zugang zu den inneren Bestandteilen zu ermöglichen.

16. Schalldämpfender und gasreinigender Auspufftopf nach Anspruch 14, dadurch gekennzeichnet, dass die Schalen (30, 31) eine doppelte Wand haben, und dass ein thermisch und akustisch isolierendes Material (33) zwischen der äusseren und der inneren Wand eingeschlossen ist.

17. Schalldämpfender und gasreinigender Auspufftopf nach Anspruch 14, dadurch gekennzeichnet, dass eine Wandung (34) um die Nachverbrennungskammer (14) angeordnet ist und sie die Schalen (30, 31) der Gerätsumgebung mit einem gewissem Abstand umgibt.

18. Schalldämpfender und gasreinigender Auspufftopf nach Anspruch 1, dadurch gekennzeichnet, dass er ein Speisungsmittel eines flüssigen, zerstäubten oder gasförmigen Brennstoffs umfasst, der in der Nachverbrennungskammer mündet um einen Antriebsschub zu verwirklichen.

**Claims**

1. An exhaust silencer-purifier, particularly for internal combustion engines, of the type where the exhaust gases are reduced to a regular flow for silencing and are subjected to a post-combustion in order to eliminate the unburned parts, comprising a first intake (1) for the gases to be treated, a second intake (2) arranged near the first intake (1) for additional air, an intake fan (7) arranged to cooperate with said first and second intakes (1, 2), a post-combustion chamber (14) disposed to confluently receive both flows arriving from said first and second intakes (1 - 2), a burner located in said post-combustion chamber (14), composed by a hollow body (15) with inlet openings (17) and outlet openings (19) and containing an electric ignition means (18), and an outlet connection (25 - 26), characterized in that said second intake (2) for additional air is disposed as a ring around the first intake (1) and is provided with valves (3 - 5) against return, that said intake fan (7) is an axial fan arranged to operate with its central part in cooperation with said first intake (1) and with its peripheral part in cooperation with said second intake (2), that said electric ignition means is formed by elements (18) heated to a temperature of luminous emission, that a set of catalytic elements (20, 21) is arranged downstream said post-combustion chamber (14) in order to realize a catalytic action aiming to suppress the noxious substances, and that the device is encircled by a thermically and acoustically insulating casing (30, 31), whose inner walls are aerodynamically shaped so as to follow the transformations of the gases which flow along the various parts of the device.

2. An exhaust silencer-purifier according to claim 1, intended for a vehicle, characterized in that said second intake (2) is positioned in such a manner that a stagnation pressure acts thereon due to the run wind of the vehicle.

3. An exhaust silencer-purifier according to claim 1, characterized in that the intake fan (7) is calculated in order to have its maximal action at a middle running (such as 60 % of the maximum running) of the engine for which the device is intended.

4. An exhaust silencer-purifier according to claim 1, characterized in that series of radial vanes (9, 12, 11) intended to guide the flow and to mechanically support some members are mounted within said first intake (1), within said second intake (2) and downstream said fan (7).

5. An exhaust silencer-purifier according to claim 1, characterized in that said burner (15) is formed by a body made of stainless steel containing nickel.

6. An exhaust silencer-purifier according to claim 1, characterized in that said burner (15) is formed by a body made of quartz.

7. An exhaust silencer-purifier according to claim 1, characterized in that said thermical elements (18) are ceramic plugs including heating electric resistances.

8. An exhaust silencer-purifier according to claim 1, characterized in that said thermical elements (18) are formed by induction heated elements.

9. An exhaust silencer-purifier according to claim 1, characterized in that said set (20 - 21) of catalytic elements is formed by a series of disks (20) and rings (21) alternately arranged, made of a syntherized permeable material formed by hollow spherical globules of copper or copper alloy.

10. An exhaust silencer-purifier according to claim 1, characterized in that downstream the set (20 - 21) of catalytic elements there is a non-dissipative silencer member formed by a spiral spring (24) made of pierced metal sheet.

11. An exhaust silencer-purifier according to claim 1, characterized in that said outlet connection (25 - 26) includes movable elements (25 - 26) elastically pushed, and displaced by the pressure of the flowing gases.

12. An exhaust silencer-purifier according to claim 11, characterized in that said outlet connection (25 - 26) is limited by two mutually connected elements (25 and 26), pushed towards each other by elastic means (18) with a force corresponding to the pressure applied by the exhaust gases in middle operation conditions.

13. An exhaust silencer-purifier according to claim 1, characterized in that air passages (29) are arranged to guide a laminar flow of ambient air around said outlet connection (25 - 26).

14. An exhaust silencer-purifier according to claim 1, characterized in that said casing (30 - 31) of the device is mainly composed of two shells (30 and 31) adjusted the one to the other according to an axial plane and mutually joined peripherally to enclose all the inner component parts.

15. An exhaust silencer-purifier according to claim 14, characterized in that some parts of said shells (30, 31) are dismountably connected in order to give access to the inner component parts.

16. An exhaust silencer-purifier according to claim 14, characterized in that said shells (30, 31) have a double wall and include between the outer wall and the inner wall a thermically and acoustically insulating material (33).

17. An exhaust silencer-purifier according to claim 14, characterized in that around the post-combustion chamber (14) there is a further wall (34), which surrounds at a certain distance the shells (30, 31) of the device casing.

18. An exhaust silencer-purifier according to claim 1, characterized in that it includes a means feeding a liquid, pulverized or gaseous fuel, which opens in the postcombustion chamber, in order to realize a propulsive effect.

FIG.1

EP 0 166 480 B1

FIG.4

FIG.5

FIG.2

FIG.3